# FASCICULE DE BREVET EUROPEEN

(11) **EP 0 511 346 B1**
(45) Date de publication et mention de la délivrance du brevet: **17.05.1995**
(21) Numéro de dépôt: 91919596.6
(22) Date de dépôt: 25.10.1991
(51) Int. Cl.: F41G 3/32, G01B 11/27

(54) **DISPOSITIF DE CONTROLE D'ALIGNEMENT ET SON APPLICATION**
AUSRICHTUNGSKONTROLLVORRICHTUNG UND IHRE VERWENDUNG
ALIGNMENT CONTROL DEVICE AND USES THEREOF

(30) Priorité: 16.11.1990 FR 9014285
(43) Date de publication de la demande: 04.11.1992
(73) Titulaire: THOMSON-CSF, 75008 Paris (FR)
(72) Inventeur: VIGOUROUX, Jean-François, F-92045 Paris-La Défense Cédex 67 (FR); ROUCHON, Jean-Marc, F-92045 Paris-La Défense Cédex 67 (FR); RICCI, Jean-Louis, F-92045 Paris-La Défense Cédex 67 (FR); WALLY, Marc, F-92045 Paris-La Défense Cédex 67 (FR)
(74) Mandataire: Lincot, Georges
(86) Numéro de dépôt international: FR9100845
(87) Numéro de publication internationale: WO9208944

(56) Documents cités:
- GB-A- 2 165 957
- US-A- 4 422 758

## Description

L'invention se rapporte au domaine de la désignation d'objectif par guidage laser pour les systèmes d'armes, et a plus particulièrement pour objet un dispositif de contrôle de l'alignement de deux voies optiques d'un système de désignation laser ou "pod" (ce terme signifiant nacelle en langue anglo-saxonne) de désignation de cible par guidage laser, à savoir une voie optique infrarouge (de longueurs d'onde de 8 à 12 micromètres) et une voie laser (1 à 2 micromètres), et un système de désignation laser équipé d'un tel dispositif de contrôle.

Dans des conditions d'environnement sévères, notamment de température et de vibration, la désignation de cible par guidage laser du projectile est avantageusement effectuée grâce à un "pod" disposé en emport externe de l'aéronef et comportant une voie d'imagerie à détection infrarouge permettant de localiser la cible et une voie laser "verrouillée" sur la voie d'imagerie. Ce verrouillage suppose le parfait alignement entre les deux voies, c'est-à-dire le parfait parallélisme de leurs axes optiques définissant alors une même ligne de visée. Or cette harmonisation, effectuée sur banc de test en usine, doit pouvoir être contrôlée en cours de mission.

Pour aligner les axes optiques d'un laser et d'un détecteur infrarouge d'un système optronique de désignation de cible, le brevet US 4 422 758 met en oeuvre, tel qu'illustré figure 1, un dispositif optique composé de miroirs 1 à 5 ; ce dispositif est destiné à focaliser le faisceau laser FL sur une céramique réfractaire 6 pour y créer un point chaud et à collimater le rayonnement infrarouge FI issu de ce point chaud sur la voie d'imagerie. La position de l'image du point chaud sur la voie d'imagerie permet de mesurer les erreurs d'alignement des deux voies.

Un premier inconvénient majeur de cette solution réside dans le type de matériau utilisé pour la mettre en oeuvre, à savoir une céramique réfractaire : ce matériau présente une faible rémanence et ne s'échauffe ni facilement ni rapidement, ce qui nécessite la focalisation d'une énergie importante sur la céramique. Ces conditions d'utilisation le rendent difficilement applicable du fait :
- de la nature impulsionnelle du faisceau laser, nécessitant une rémanence de luminosité entre deux impulsions ;
- de la mise en oeuvre, dans les caméras thermiques à balayage, d'un système de déflexion de la ligne de visée n'adressant la mosaïque de détecteurs que pendant un temps très bref ;
- et de la durée du test d'alignement, qui ne doit pas dépasser quelques secondes alors que le matériau utilisé s'échauffe avec difficulté.

Un autre inconvénient majeur résulte des erreurs de parallélisme des voies laser et infrarouge engendrées par les erreurs d'inclinaison des supports des miroirs du dispositif optique ; pour résoudre ce problème, l'art antérieur propose un procédé de réglage au sol en trois étapes faisant intervenir notamment, un télescope. Un tel réglage est fragile et ne peut être conservé dans les conditions de contraintes évoquées.

Un dernier inconvénient est relatif à l'organisation des miroirs 1 à 5 du système optique qui confère à l'ensemble un encombrement en fait incompatible avec l'espace disponible.

Pour pallier ces inconvénients, l'invention propose un dispositif de contrôle de l'alignement des deux voies optiques, laser et infrarouge, conçu de façon à n'introduire aucune erreur de parallélisme et reposant sur la formation d'un point chaud par échauffement localisé d'un film polyimide disposé dans un dispositif d'avancée fiable.

Plus précisément, l'invention a pour objet un dispositif de contrôle de l'alignement de deux voies optiques, une voie de visée à faisceau laser et une voie d'imagerie infrarouge, comprenant des moyens de conversion du faisceau laser en un faisceau infrarouge parallèle et des moyens pour aligner la voie d'imagerie infrarouge sur le faisceau converti, caractérisé en ce qu'il se présente sous la forme d'un boîtier optique portant les moyens de conversion et en ce que ces moyens de conversion sont constitués d'une cassette contenant un film polyimide en bande et d'un ensemble d'éléments réfléchissants.

L'invention sera mieux comprise et d'autres caractéristiques et avantages apparaîtront à la lecture de la description qui suit en référence aux figures annexées représentant respectivement :
- la figure 1, le dispositif d'alignement de l'Art Antérieur
- la figure 2, le schéma d'implantation général du système selon l'invention ;
- la figure 3, le trajet optique des faisceaux laser et infrarouge ;
- la figure 4, un premier mode de réalisation du boîtier de contrôle d'alignement ;
- la figure 5, un second mode de réalisation du boîtier de contrôle d'alignement.

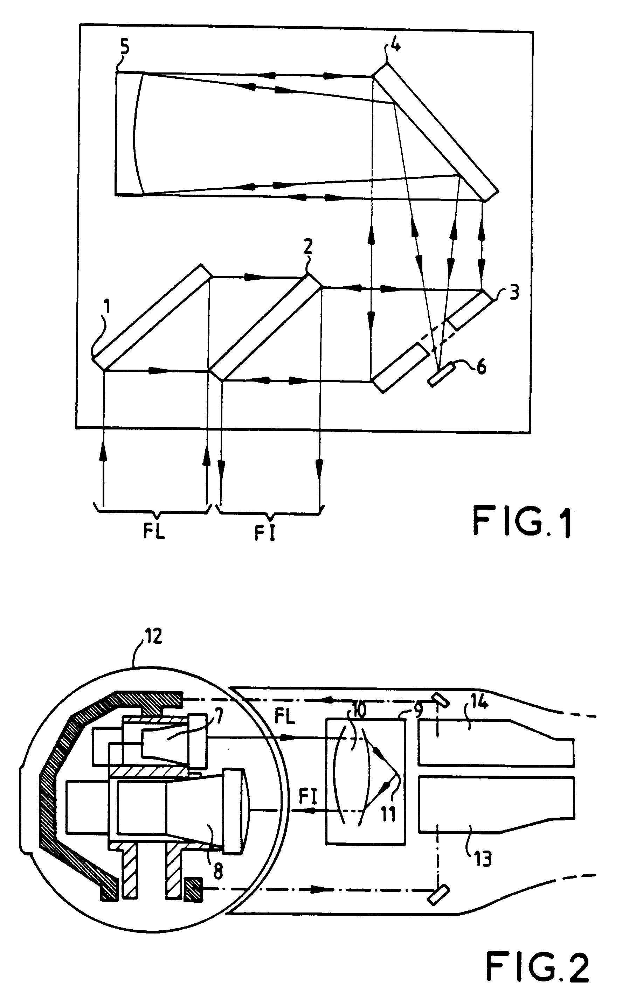

La figure 2 illustre le schéma d'implantation du système de contrôle selon l'invention dans un "pod" de désignation laser : elle représente un capot suiveur contenant une tête optique 12 d'orientation de la ligne de visée, constituée de dispositifs afocaux 7 et 8, respectivement pour la voie laser et de la voie infrarouge, les faisceaux FL et FI des rayonnements laser et infrarouge, FL émergeant du dispositif afocal 7 pour venir sur le boîtier de contrôle d'alignement 9 et FI sortant du boîtier 9 pour retourner parallèlement à FL vers le dispositif afocal 8, le boîtier 9 contenant un système optique 10 de focalisation et de collimation et un film polyimide 11. La tête optique 12 est retournée afin de faire face au boîtier 9. Ainsi, le système optique 10 se comporte comme un coin de cube en convertissant le faisceau laser incident FL en un faisceau infrarouge FI qui émerge, collimaté, strictement parallèlement au faisceau FL. Le faisceau FI forme l'image du point chaud sur le film 11 par focalisation sur le détecteur d'une caméra thermique 13. L'erreur d'alignement entre les deux voies est alors mesurée par écartométrie, c'est-à-dire par l'écart entre la position de cette image ainsi détectée et sa position théorique située, en cas de parallélisme parfait des 2 voies, au point de référence du détecteur.

Le boîtier de contrôle d'alignement 9 est disposé avantageusement dans la zone où la ligne de visée se trouve lors de l'impact du projectile sur la cible, c'est-à-dire à l'arrière de la tête optique d'orientation de la ligne de visée 12 contenant les optiques de tête 7 et 8 et en avant de l'ensemble caméra thermique 13 et laser 14 formant un banc optique. Afin de corriger le défaut d'harmonisation, l'orientation de l'axe optique de la voie infrarouge est modifiée au moyen d'un miroir de renvoi (non représenté) jusqu'à annuler l'écart mesuré. Un tel miroir peut être monté classiquement sur cales piézoélectriques entre la tête optique 8 et la caméra thermique 13.

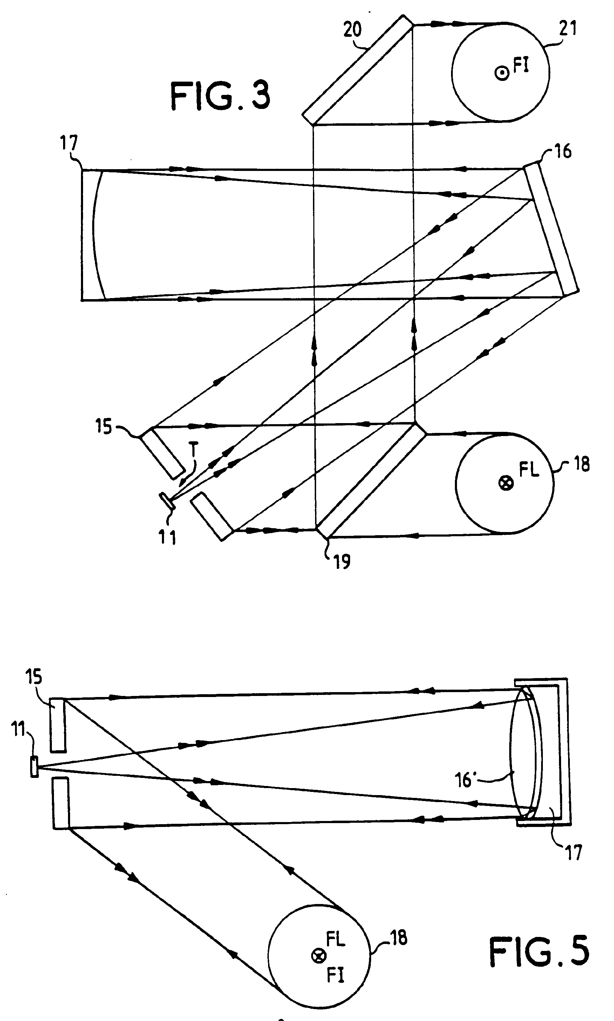

L'agencement des différents miroirs du système optique 10, définissant le trajet optique entre le faisceau laser incident FL et le faisceau infrarouge émergeant FI, et du film polyimide 11 est représenté sur la figure 3 : le faisceau incident FL est d'abord coudé par un miroir d'entrée 18, puis traverse un miroir dichroïque 19, transparent dans la bande 1-2 »m ; il est ensuite focalisé sur le film polyimide 11, après réflexion successivement sur des miroirs plans 15 et 16 et sur un miroir sphérique de focalisation 17 qui renvoie le faisceau sur le miroir 16 avant de traverser le miroir 15 grâce à un trou central T destiné à laisser passer le faisceau laser, le film 11 étant situé en arrière du miroir 15. L'échauffement du film polyimide provoque l'apparition d'un point chaud dont le rayonnement infrarouge est collimaté, pour former le faisceau infrarouge FI transmis par la succession inverse des miroirs 16-17-16-15 ; le faisceau FI est enfin dévié vers un miroir de sortie infrarouge 21 après réflexion sur le miroir dichroïque 19, qui réfléchit les radiations de la bande 8-12 »m, et sur un miroir 20.

Cependant, un film polyimide d'épaisseur quelconque n'est pas utilisable pour une telle application. L'épaisseur du film est en effet une caractéristique fondamentale qu'il convient d'ajuster avec précision car elle commande la rapidité d'apparition de la tache formant l'impact du laser sur le film (encore appelé "point chaud"), l'intensité du rayonnement infrarouge émis, la rémanence et la durée d'exploitation de cette tache. Un film trop fin (typiquement d'épaisseur inférieure à 25 »m) brûle trop vite (après moins d'une seconde d'exposition) pour pouvoir être exploitable ; d'un autre côté, un film trop épais (typiquement d'épaisseur supérieure à 100 »m) s'échauffe lentement, et forme une tache qui présente une luminosité et une rémanence insuffisantes (moins de 20 ms). Un film de polyimide d'épaisseur comprise entre 25 et 100 »m, en particulier de 50 »m, est un bon choix car il remplit les qualités requises (rémanence, durée d'exploitation, luminosité).

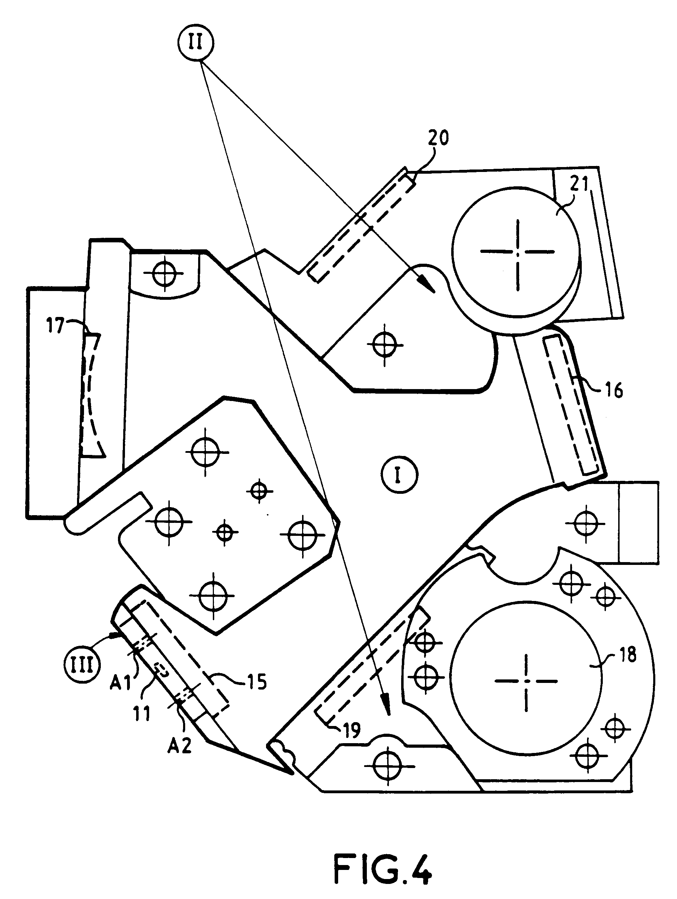

Un mode de réalisation du boîtier de contrôle alignement selon l'invention, dans lequel sont montés les éléments décrits en référence à la figure 3, est représentée schématiquement à la figure 4. Il se présente structurellement sous la forme de 2 demi-boîtiers I et II de forme complémentaire, de façon à s'emboîter l'un dans l'autre, et d'une cassette III contenant le film polyimide. Sur le premier demi-boîtier I sont prévus des plans de pose pour supporter les éléments (miroirs 15 à 17 et film polyimide 11) communs aux deux trajets optiques, à savoir le trajet du faisceau laser et le trajet du faisceau infrarouge (symbolisés respectivement sur la figure 2 par une simple et une double flèche) ; sur le second demi-boîtier II, sont prévus des plans de pose pour supporter les éléments optiques (miroirs 18 à 21) non communs aux deux voies, c'est-à-dire propres soit au trajet du faisceau infrarouge, soit au trajet du faisceau laser.

Pour minimiser les défauts introduits par le positionnement approximatif des éléments optiques non communs aux deux voies, deux impératifs sont ainsi respectés grâce au boîtier selon l'invention :
- le nombre d'éléments non communs est minimal : dans l'exemple de réalisation, et compte-tenu de la nécessité d'un encombrement minimal obtenu grâce au coudage des faisceaux d'entrée et de sortie, il est de quatre (un miroir d'entrée laser 18, trois miroirs de sortie infrarouge 19 à 21),
- les miroirs non communs aux deux voies sont montés sur la même pièce mécanique (demi-boîtier II), ce qui permet d'usiner ensemble les plans de pose des miroirs 19 et 20, d'une part, et ceux des miroirs 18 et 21, d'autre part. Une grande précision d'alignement de ces miroirs est ainsi obtenue (de l'ordre de 100 »rd), fournissant un parallélisme entre les voies optiques d'entrée et de sortie quasi parfait.

Le souci de précision qui commande à l'élaboration du demi-boîtier II n'est plus de rigueur avec l'élaboration des plans de pose des éléments optiques du demi-boîtier I: en effet, les faisceaux FL et FI restent parfaitement parallèles dans cette partie du fait que les éléments optiques intervenant ne font que définir un seul et même trajet géométrique pour les deux voies laser et infrarouge, seuls les sens de propagation des faisceaux FL et FI étant inversés : les miroirs rapportés sur les plans de pose de ce demi-boîtier I forment un même système optique de focalisation ou de collimation suivant le sens du trajet optique suivi.

La cassette III contenant le film de polyimide est intégré au demi-boîtier I, contenant les éléments optiques communs aux 2 voies. Le film de polyimide choisi, dont l'épaisseur (comprise entre 25 et 100 »m) a été déterminée à partir de caractéristiques optiques, ne peut être utilisé plus d'une fois dans les conditions d'utilisation mises en oeuvre (c'est-à-dire avec un laser de puissance supérieure à quelques MW). Cet obstacle est franchi précisément par la mise en place d'une telle cassette présentant deux axes A1 et A2 sur lesquels est embobiné le film de polyimide qui présente, avec une épaisseur comprise entre 25 et 75 »m, une souplesse suffisante. Entre deux tests d'alignement, la bande est avancée de quelques millimètres.

Cependant, une adaptation spécifique doit être optimisée afin de rendre exploitable un tel matériel dans les conditions sévères d'utilisation (en particulier dans un environnement vibratoire).

Dans ce but, il convient impérativement de solidariser les axes de bobinage avec le bâti du pod porteur du boîtier de contrôle 9 et de mettre en place un cliquet anti-retour agissant sur la bande polyimide, afin de conserver au film une tension suffisante et constante. De plus, l'association d'un des axes de bobinage avec un opto-coupleur de recopie de position permet de vérifier la bonne avancée du film ; il est alors nécessaire de supprimer le jeu sur l'axe de recopie grâce à une légère surpression, formée lors de la mise en place de la cassette ;

En variante, le dispositif d'alignement selon l'invention peut équiper en version simplifiée un système de désignation laser à voie optique finale commune, la tête optique de déflexion de la ligne de visée étant commune aux voies laser (1 à 2 »m) et infrarouge (dans la bande de longueur d'onde 3-5 »m ou 8-12 »m) ultérieurement séparées grâce à un séparateur optique, par exemple un miroir dichroïque. Dans ces conditions, le boîtier d'alignement se compose principalement, comme illustré par la figure 5, du miroir d'entrée 18, du miroir troué 15 et du miroir sphérique 17 associé à une lentille convergente 16′, les miroirs de sortie 19 à 21 n'étant plus nécessaires. Le faisceau converti FI ressort coaxialement au faisceau laser incident FL via le miroir 18 qui sert de miroir d'entrée/sortie.

L'invention n'est pas limitée aux modes de réalisation décrits et représentés, en particulier :
- le matériau utilisé pour le miroir sphérique peut être en aluminium comme la structure du boîtier support afin d'éviter toute défocalisation thermique,
- l'homme du métier peut mettre en oeuvre un réglage fin de l'alignement des deux voies, après usinage du boîtier, à l'aide de prismes diasporamètres placés sur la voie laser (en particulier devant le miroir d'entrée),
- lorsque le faisceau laser focalise trop précisément sur le film polyimide, il se produit un phénomène de "claquage" dû à l'ionisation de l'air environnant et aucune tache n'apparaît, il peut alors être prévu de défocaliser légèrement le faisceau laser sur l'axe optique (de 1 à 3 mm) grâce à une lentille de grande focale placée à l'entrée de la voie laser.

## Revendications

1. Dispositif de contrôle d'alignement de deux voies optiques, une voie de visée à faisceau laser (FL) et une voie d'imagerie infrarouge, comprenant un boîtier optique (9) contenant des moyens de conversion du faisceau laser en un faisceau infrarouge parallèle au faisceau laser et des moyens pour aligner la voie d'imagerie infrarouge sur le faisceau résultant de la conversion et comprenant un ensemble optique (10) pour la focalisation du faisceau laser (FL) et la collimation du faisceau infrarouge (FI) résultant de la conversion, caractérisé en ce que les moyens de conversion sont constitués d'un film polyimide en bande (11) contenu dans une cassette (III) de manière à pouvoir être avancé pour présenter au faisceau laser une portion différente après chaque avancement.

2. Dispositif de contrôle d'alignement selon la revendication 1 appliqué à deux voies optiques séparées, l'ensemble optique (10) étant composé d'un sous-ensemble d'éléments réfléchissants communs aux deux voies optiques et d'un sous-ensemble d'éléments réfléchissants propres à l'une ou à l'autre de ces deux voies, caractérisé en ce que le boîtier (9) est formé de deux demi-boîtiers, un premier demi-boîtier (I) portant les éléments réfléchissants (15 à 17) communs aux deux voies optiques et un second demi-boîtier (II), portant les éléments réfléchissants (18 à 21) propres à l'une ou à l'autre des deux voies optiques, en ce que le sous-ensemble d'éléments réfléchissants propres à l'une ou à l'autre des deux voies constitue un système optique à voies d'entrée/sortie parallèles composé d'un miroir d'entrée (18) destiné à couder le faisceau laser incident FL et de trois miroirs de sortie (19, 20, 21), destinés à couder le faisceau infrarouge émergent FI, et en ce que le sous-ensemble d'éléments réfléchissants communs aux deux voies est composé de miroirs (15, 16 et 17) destinés à la focalisation du faisceau laser FL sur le film polyimide (11) et à la collimation du faisceau infrarouge FI émis par le film polyimide (11).

3. Dispositif de contrôle d'alignement selon la revendication 1 appliqué à deux voies optiques d'axes confondus, caractérisé en ce que ledit ensemble optique (10) comporte un miroir d'entrée (18) pour le faisceau laser incident FL et de miroirs (15, 16′, 17) destinés à la focalisation du faisceau FL sur le film polyimide (11) et à la collimation du faisceau FI émis par le film polyimide (11), le faisceau FI émergeant en sortie coaxialement au faisceau FL incident par le même miroir (18).

4. Dispositif de contrôle selon la revendication 1, caractérisé en ce que le film polyimide (11) a une épaisseur comprise entre 25 et 75 »m et est embobiné sous forme de bande dans la cassette (III) intégrée au demi-boîtier de contrôle d'alignement (I) et équipée de moyens d'avancée du film.

5. Dispositif de contrôle selon la revendication 4, caractérisé en ce que la cassette (III) comporte deux axes (A₁) et (A₂) pour embobiner le film de polyimide (11), ces axes étant solidarisés au bâti du "pod", un cliquet anti-retour pour assurer une tension suffisante à la bande de polyimide et un opto-coupleur en recopie de position pour contrôler l'avancée du film.

6. Dispositif de contrôle selon les revendications 2 ou 3, caractérisé en ce que le boîtier (9) et le miroir (17) de focalisation/collimation sont en aluminium.

7. Dispositif de contrôle selon les revendications 2 ou 3, caractérisé en ce que le parallélisme des faisceaux incident et émergeant FL et FI est affiné à l'aide de prismes diasporamétres placés sur le trajet du faisceau laser.

8. Dispositif de contrôle selon les revendication 2 ou 3, caractérisé en ce que le faisceau laser est défocalisé de 1 à 3 mm par rapport à la focale du miroir de focalisation/collimation (17).

9. Système de désignation de cible par guidage laser, comportant notamment une tête optique (12) d'orientation de la ligne de visée constitué d'au moins un dispositif afocal (7) pour une voie laser et une voie infrarouge (8) et un banc optique (10) constitué d'une caméra thermique (13) et d'une source laser (14), caractérisé en ce qu'il comporte un dispositif de contrôle d'alignement (9) selon l'une des revendications précédentes, disposé entre la tête optique de visée (12) et le banc optique (10) de façon à convertir le faisceau laser FL, provenant du système afocal (7), en un faisceau infrarouge FI d'axe rigoureusement parallèle ou confondu avec celui du faisceau laser FL et transmis au système afocal (8) lorsque la tête optique de visée (12) est retournée.

## Claims

1. Device for monitoring alignment of two optical paths, a laser beam (FL) aiming path and an infrared imaging path, comprising an optical housing (9) containing means of converting the laser beam into an infrared beam parallel to the laser beam and means for aligning the infrared imaging path onto the beam resulting from the conversion, and comprising an optical assembly (10) for focusing the laser beam (FL) and collimating the infrared beam (FI) resulting from the conversion, characterized in that the conversion means consist of a polyimide film strip (11) contained in a cassette (III) in such a way as to be able to be advanced in order to present the laser beam with a different portion after each advance.

2. Alignment monitoring device according to Claim 1 applied to two separate optical paths, the optical assembly (10) being composed of a sub-assembly of reflecting elements common to the two optical paths and of a sub-assembly of reflecting elements specific to one or to the other of these two paths, characterized in that the housing (9) is formed by two half-housings, a first half-housing (I) carrying the reflecting elements (15 to 17) which are common to the two optical paths and a second half-housing (II), carrying the reflecting elements (18 to 21) which are specific to one or to the other of the two optical paths, in that the sub-assembly of reflecting elements specific to one or the other of the two paths constitutes an optical system with parallel entry/exit paths composed of an entry mirror (18) intended to bend the incident laser beam FL and of three exit mirrors (19, 20, 21), intended to bend the emergent infrared beam FI, and in that the sub-assembly of reflecting elements which are common to the two paths is composed of mirrors (15, 16 and 17) intended for the focusing of the laser beam FL onto the polyimide film (11) and for the collimation of the infrared beam FI emitted by the polyimide film (11).

3. Alignment monitoring device according to Claim 1 applied to two optical paths with coincident axes, characterized in that the said optical assembly (10) comprises an entry mirror (18) for the incident laser beam FL and mirrors (15, 16′, 17) intended for the focusing of the beam FL onto the polyimide film (11) and for the collimation of the beam FI emitted by the polyimide film (11), the beam FI emerging at the exit coaxially to the incident beam FL via the same mirror (18).

4. Monitoring device according to Claim 1, characterized in that the polyimide film (11) has a thickness lying between 25 and 75 »m and is wound in the form of a strip in the cassette (III) integrated into the halfhousing for alignment monitoring (I) and equipped with means for advancing the film.

5. Monitoring device according to Claim 4, characterized in that the cassette (III) comprises two spindles (A₁) and (A₂) for winding the polyimide film (11), these spindles being firmly attached to the frame of the "pod", an anti-return ratchet for ensuring sufficient tension in the polyimide strip and a position-recopy optical coupler for monitoring the advance of the film.

6. Monitoring device according to Claims 2 or 3, characterized in that the housing (9) and the mirror (17) for focusing/collimation are made of aluminium.

7. Monitoring device according to Claims 2 or 3, characterized in that the parallelism in the incident and emergent beams FL and FI is refined with the aid of diasporametric prisms placed on the route of the laser beam.

8. Monitoring device according to Claim 2 or 3, characterized in that the laser beam is defocused by 1 to 3 mm with respect to the focal length of the focusing/collimation mirror (17).

9. Target designation system by laser guidance, especially comprising an optical head (12) for orientation of the aiming line constituted by at least one afocal device (7) for a laser path and an infrared path and an optical bench constituted by a thermal camera (13) and by a laser source (14), characterized in that it comprises an alignment monitoring device (9) according to one of the preceding claims, arranged between the optical aiming head (12) and the optical bench (10) in such a way so as to convert the laser beam FL, originating from the afocal system (7), into an infrared beam FI with an axis rigorously parallel or coincident with that of the laser beam FL and transmitted to the afocal system (8) when the optical aiming head (12) is turned round.

## Patentansprüche

1. Vorrichtung zur Fluchtungskontrolle von zwei optischen Kanälen, nämlich einem Visierkanal mit Laserstrahl (FL) und einem Infrarotbildkanal, mit einem optischen Gehäuse (9), das Mittel zur Umwandlung des Laserstrahls in einen zum Laserstrahl parallelen Infrarotstrahl und Mittel, um den Infrarotbildstrahl mit dem aus der Umwandlung stammenden Strahl in Flucht zu bringen, sowie eine optische Einheit (10) aufweist, um den Laserstrahl (FL) zu fokussieren und den aus der Umwandlung stammenden Infrarotstrahl (FI) zu kollimatieren, dadurch gekennzeichnet, daß die Umwandlungsmittel aus einem bandförmigen Polyimidfilm (11) bestehen, der in einer Kassette (III) enthalten ist, so daß er weiterbefördert werden kann, um nach jedem Vorschub dem Laserstrahl einen anderen Bereich zu bieten.

2. Vorrichtung zur Fluchtungskontrolle nach Anspruch 1 in Anwendung auf zwei getrennte optische Kanäle, wobei die optische Einheit (10) aus einer Untereinheit von für die beiden optischen Kanäle gemeinsamen reflektierenden Elementen und einer Untereinheit von je einem der beiden Kanäle zugehörigen reflektierenden Elementen gebildet wird, dadurch gekennzeichnet, daß das Gehäuse (9) aus zwei Halbgehäusen gebildet wird, von denen das erste (I) die den beiden optischen Kanälen gemeinsamen reflektierenden Elemente (15 bis 17) und ein zweites Halbgehäuse (II) die je einem der beiden optischen Kanäle zugeordneten reflektierenden Elemente (18 bis 21) trägt, daß die Untereinheit von reflektierenden Elementen, die je einem der beiden Kanäle zugeordnet sind, ein optisches System mit parallelen Eingängen und Ausgängen bildet, das aus einem Eingangsspiegel (18), mit dem der einfallende Laserstrahl (FL) geknickt wird, und aus drei Ausgangsspiegel (19, 20, 21) besteht, die den austretenden Infrarotstrahl (FI) knicken sollen, und daß die Untereinheit von den beiden Kanälen gemeinsamen reflektierenden Elementen aus Spiegeln (15, 16, 17) besteht, die der Fokussierung des Laserstrahls (FL) auf den Polyimidfilm (11) und der Kollimatierung des von dem Polyimidfilm ausgehenden Infrarotstrahls FI dienen.

3. Vorrichtung zur Fluchtungskontrolle nach Anspruch 1 in Anwendung auf zwei optische Kanäle mit zusammenfallenden Achsen, dadurch gekennzeichnet, daß die optische Einheit (10) einen Eingangsspiegel (18) für den ankommenden Laserstrahl FL sowie Spiegel (15, 16′, 17) aufweist, die der Fokussierung des Laserstrahls FL auf den Polyimidfilm (11) und der Kollimatierung des von dem Polyimidfilm (11) ausgehenden Strahls FI dienen, wobei der Strahl FI koaxial zum ankommenden Strahl FL aus dem gemeinsamen Spiegel (18) austritt.

4. Kontrollvorrichtung nach Anspruch 1, dadurch gekennzeichnet, daß der Polyimidfilm (11) eine Dicke zwischen 25 und 75 »m besitzt und in Bandform in der Kassette (III) aufgespult ist, die in das Halbgehäuse zur Fluchtungskontrolle (I) integriert ist und Mittel zum Filmvorschub aufweist.

5. Kontrollvorrichtung nach Anspruch 4, dadurch gekennzeichnet, daß die Kassette (III) zwei Spulenkörper (A₁, A₂) zum Aufwickeln des Polyimidfilms (11) aufweist, die mit dem Gerüst der Gondel fest verbunden sind, und daß eine Sperrklinke eine ausreichende Spannung des Polyimidbands gewährleistet und ein Optokoppler die Spulenkörperlage erfaßt, um den Vorschub des Films zu überwachen.

6. Kontrollvorrichtung nach den Ansprüchen 2 oder 3, dadurch gekennzeichnet, daß das Gehäuse (9) und der Spiegel (17) zur Fokussierung und Kollimatierung aus Aluminium sind.

7. Kontrollvorrichtung nach den Ansprüchen 2 oder 3, dadurch gekennzeichnet, daß die Parallelität des einfallenden und austretenden Strahls FL bzw. FI mit Hilfe von Diasporameter-Prismen feingeregelt wird, die im Verlauf des Laserstrahls angeordnet werden.

8. Kontrollvorrichtung nach den Ansprüchen 2 oder 3, dadurch gekennzeichnet, daß der Brennpunkt des Laserstrahls um 1 bis 3 mm bezüglich der Brennweite des Spiegels (17) zur Fokussierung und Kollimatierung verschoben wird.

9. System zur Zielverfolgung durch Laserführung, das insbesondere einen optischen Kopf (12) zur Orientierung der Visierlinie, bestehend aus mindestens einem afokalen System (7) für einen Laserkanal und für einen Infrarotkanal (8), und eine optische Bank (10) aufweist, bestehend aus einer thermischen Kamera (13) und einer Laserquelle (14), dadurch gekennzeichnet, daß das System eine Vorrichtung zur Fluchtungskontrolle (9) gemäß einem der vorhergehenden Ansprüche aufweist, die zwischen dem optischen Visierkopf (12) und der optischen Bank (10) liegt, um den Laserstrahl FL, der vom afokalen System (7) in einen Infrarotstrahl FI umzuwandeln, dessen Achse genau parallel zu der des Laserstrahls FL verläuft oder mit dieser zusammenfällt, wobei dieser Infrarotstrahl zum afokalen System (8) übertragen wird, wenn der optische Visierkopf (12) umgekehrt ist.
